# FASCICULE DE BREVET EUROPEEN

(11) **EP 2 473 729 B1**
(45) Date de publication et mention de la délivrance du brevet: **22.06.2016**
(21) Numéro de dépôt: 10752868.9
(22) Date de dépôt: 26.07.2010
(51) Int. Cl.: F02N 11/00, F02N 11/08, F02N 11/04

(54) **PROCEDE DE COMMANDE D'UN SYSTEME MICRO-HYBRIDE**
VERFAHREN ZUR STEUERUNG EINES MIKROHYBRIDSYSTEMS
METHOD FOR CONTROLLING A MICRO-HYBRID SYSTEM

(30) Priorité: 02.09.2009 FR 0955974
(43) Date de publication de la demande: 11.07.2012
(73) Titulaire: Valeo Equipements Electriques Moteur, 94046 Créteil Cedex (FR)
(72) Inventeur: GRANZIERA, Cyril, F-75015 Paris (FR)
(86) Numéro de dépôt international: PCT/FR2010/051579
(87) Numéro de publication internationale: WO 2011/027058

(56) Documents cités:
- DE-A1-102006 057 892
- FR-A1- 2 875 556
- FR-A1- 2 925 128
- FR-A1- 2 925 618
- GB-A- 2 363 266

## Description

L'invention concerne un procédé de commande d'un système micro-hybride comportant une machine électrique tournante réversible, notamment un alterno-démarreur, pouvant être reliée à un moteur thermique d'un véhicule automobile.

L'invention concerne également un module de commande du système micro-hybride, et ce système.

Par le document DE102006057892A1, il est connu un procédé de commande d'un système start-stop comportant une machine électrique tournante réversible pouvant être reliée à un moteur thermique d'un véhicule automobile et un module de commande. Le procédé selon ce document comporte une étape de préfluxage d'un rotor de la machine électrique tournante réversible lorsque le module de commande reçoit un ordre de démarrer le moteur thermique via la machine électrique tournante réversible.

Comme cela est également connu dans l'état de la technique, la machine alterno-démarreur comporte un rotor dimensionné de manière à pouvoir assurer, en mode démarreur, le démarrage du moteur thermique. Une bobine d'excitation du rotor est alimentée avec un courant d'excitation modulé en largeur d'impulsion (PWM en terminologie anglaise) et ayant un rapport cyclique évoluant entre 0 et 100%. En mode alternateur, la machine fonctionne avec un rapport cyclique de 0 à 50%. En mode de préfluxage ou en mode moteur électrique, la machine peut être commandée avec un rapport cyclique de 100% afin d'obtenir un couple mécanique maximum pour entraîner en rotation le moteur thermique et démarrer celui-ci.

On connaît des systèmes micro-hybrides de véhicule comportant un alterno-démarreur et un démarreur auxiliaire. Pour les démarrages à froid du moteur thermique, il est connu d'utiliser soit le démarreur auxiliaire seul, soit le démarreur auxiliaire et l'alterno-démarreur opérant de concert.

Lorsque le démarreur auxiliaire et l'alterno-démarreur opèrent de concert, dans une première phase, le démarreur auxiliaire commence seul l'entraînement du moteur thermique et, simultanément, un courant d'excitation de préfluxage est fourni au rotor de l'alterno-démarreur afin de préparer celui-ci à un fonctionnement en mode moteur. Dans une seconde phase, si nécessaire, c'est-à-dire, dans le cas où le moteur thermique n'a pas démarré lors de la première phase, l'alterno-démarreur peut participer à l'entraînement du moteur thermique et finaliser le démarrage de celui-ci.

Durant l'étape de préfluxage, le rotor de la machine peut être préfluxé avec un rapport cyclique de 100% sans fourniture de couple. Autrement dit, l'alterno-démarreur fonctionne alors en mode générateur avec un rapport cyclique bien supérieur à 50%, c'est-à-dire, au-delà d'un maximum d'excitation généralement admis en mode générateur. Il y a donc dans ce système micro-hybride connu des risques de générer des surtensions, d'une part, sur un réseau de bord du véhicule, et d'autre part, aux bornes d'une unité de stockage d'énergie du système, notamment une batterie, ce réseau et cette batterie étant alimentés électriquement par l'alterno-démarreur lorsque celui-ci fonctionne en mode générateur.

Une telle situation peut aussi se produire dans le cas d'un ordre de relance du moteur thermique intervenant peu après un ordre d'arrêt dudit moteur, alors que celui-ci n'a pas encore une vitesse de rotation nulle. Dans un tel cas, le moteur thermique étant chaud, son démarrage est tenté uniquement avec l'alterno-démarreur. L'étape de préfluxage du rotor est faite préalablement à une alimentation des bobinages statoriques de la machine et la machine fonctionne en générateur pendant cette étape où le moteur thermique tourne encore du fait de son inertie. L'injection du carburant dans le moteur thermique étant immédiatement rétablie suite à l'ordre de relance de celui-ci, un démarrage du moteur thermique chaud peut se produire alors que l'étape de préfluxage est en cours avec un rapport cyclique de 100%, entraînant une montée en vitesse de la machine et des risques de génération de surtensions.

L'invention vise à remédier aux inconvénients précités.

Selon un premier aspect, l'invention concerne un procédé de commande d'un système micro-hybride selon la revendication 1.

Grâce à l'invention, il est possible d'éviter, durant cette étape de préfluxage, la génération de surtensions, sur un réseau de distribution électrique, notamment formé d'une part, par un réseau de bord du véhicule, ce réseau étant pourvu notamment de consommateurs électriques, et d'autre part, par une unité de stockage d'énergie du système micro-hybride. Ce réseau de distribution est alimenté électriquement par l'alterno-démarreur lorsqu'il fonctionne en mode générateur.

En effet, durant l'étape de préfluxage, la machine électrique tournante réversible fonctionne en mode générateur et présente un rapport cyclique de 100%, correspondant à un rapport cyclique maximum défini pour le mode moteur de cette machine.

Ainsi, cette étape de préparation indispensable au démarrage du moteur thermique via la machine électrique tournante réversible, pourrait générer des surtensions dans le système micro-hybride si elle n'était pas arrêtée, puisqu'il n'y a pas de régulation de tension durant cette étape.

Selon un mode de réalisation de l'invention, la valeur de seuil de vitesse prédéterminée peut correspondre sensiblement à la vitesse du rotor à laquelle la machine électrique tournante réversible commence à fournir une alimentation électrique.

Cette alimentation électrique peut être de préférence dirigée vers l'un au moins du réseau de bord du véhicule et de l'unité de stockage d'énergie.

Selon un mode de réalisation de l'invention, le procédé peut commander une étape d'inhibition de l'étape de préfluxage, notamment pour empêcher que cette étape se répète avant que le moteur thermique ne démarre.

Si on le souhaite, le procédé peut commander une étape de démarrage du moteur thermique via la machine électrique tournante réversible en actionnant le mode moteur de cette machine.

Dans ce cas, le procédé peut commander la machine pour qu'elle présente un rapport cyclique de 100% en fournissant un couple au moteur thermique.

Pour cela, le procédé peut commander un convertisseur alternatif-continu du système micro-hybride, ce convertisseur étant relié à la machine électrique tournante réversible.

On dit aussi que le convertisseur fonctionne en mode onduleur.

En variante, le procédé peut commander une étape de repos de la machine électrique tournante réversible en gardant le mode générateur de cette machine.

Dans ce cas, le procédé peut commander la machine pour qu'elle présente un rapport cyclique inférieur ou égal à 50% en fournissant de l'énergie électrique.

De préférence, le procédé peut commander la machine pour qu'elle présente un rapport cyclique nul pendant une période prédéterminée, dite de sécurité.

Le cas échéant, l'étape de repos est assimilée à une étape d'arrêt de la machine.

Lorsque le procédé commande l'étape de repos, ou d'arrêt, de la machine électrique tournante réversible, alors ce procédé peut commander le démarrage du moteur thermique par le démarreur auxiliaire du système micro-hybride.

Selon un autre aspect, l'invention concerne un module de commande d'un système micro-hybride selon la revendication 10.

Selon encore un autre aspect, l'invention concerne un système micro-hybride pour véhicule automobile comportant:
- une machine électrique tournante réversible, notamment un alterno-démarreur,
- un module de commande selon la revendication 10.

Selon un exemple de mise en oeuvre de l'invention, le module de commande peut être intégré sur la machine électrique tournante réversible.

Selon un autre exemple de mise en oeuvre de l'invention, le système micro-hybride peut comporter une unité de stockage d'énergie relié à la machine électrique tournante réversible.

De préférence, le système micro-hybride peut comporter un dispositif de démarrage auxiliaire apte à démarrer le moteur thermique.

L'invention a aussi pour objet un véhicule automobile comportant un système micro-hybride tel que décrit ci-dessus.

L'invention pourra être mieux comprise à la lecture de la description détaillée qui va suivre, d'exemples de mise en oeuvre non limitatifs de l'invention, et à l'examen du dessin annexé, sur lequel:
- la figure 1 représente, schématiquement et partiellement, un système micro-hybride selon l'invention, et
- la figure 2 correspond à un schéma-blocs illustrant différentes étapes de fonctionnement du système de la figure 1.

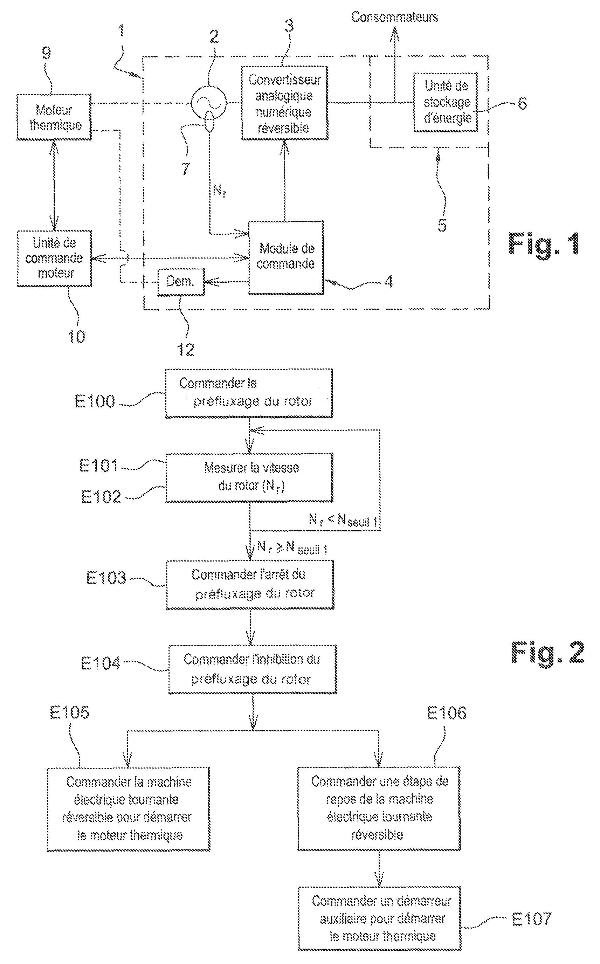

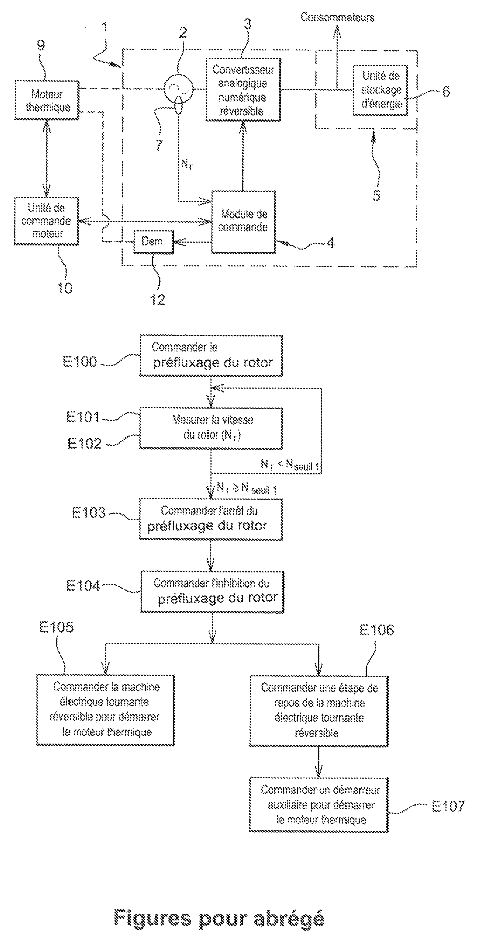

On a représenté sur la figure 1 un système micro-hybride 1 comportant une machine électrique tournante réversible polyphasée 2, un convertisseur de puissance réversible de type alternatif-continu 3, un module de commande 4, et un réseau de distribution électrique 5.

La machine électrique tournante réversible polyphasée 2 est formée, dans l'exemple considéré, par un alterno-démarreur de véhicule automobile comprenant un rotor et un stator.

Cet alterno-démarreur peut être formé par une machine synchrone réversible.

L'alterno-démarreur 2 est capable, outre d'être entraîné en rotation par un moteur thermique 9 pour produire de l'énergie électrique (mode alternateur), de transmettre un couple à ce moteur thermique 9 pour un démarrage (mode démarreur).

L'alterno-démarreur 2, le convertisseur 3, et le réseau de distribution électrique 5 sont reliés en série.

Le réseau de distribution électrique 5 comporte une unité de stockage d'énergie 6.

L'unité de stockage d'énergie 6 peut comprendre une batterie d'alimentation classique, par exemple de type batterie au plomb, ou en variante un super-condensateur. Cette batterie 6 permet, outre d'alimenter l'alterno-démarreur durant une phase de démarrage (mode moteur), de fournir de l'énergie électrique à des consommateurs électriques du véhicule, par exemple des projecteurs, un autoradio, un dispositif de climatisation, des essuie-glaces.

Le convertisseur 3 autorise des transferts bidirectionnels d'énergie électrique entre l'alterno-démarreur 2 et la batterie 6, ces transferts étant notamment commandés par le module de commande 4 connecté au convertisseur 3.

Le module de commande 4 du système micro-hybride 1 peut être construit autour d'un microprocesseur associé à un moyen de contrôle et de commande.

Le module de commande 4 est relié à une unité de commande moteur 10 apte à gérer le moteur thermique 9.

L'unité de commande moteur 10 est apte à recevoir des informations représentatives d'un état du moteur 9, notamment via des moyens de mesures disposés notamment sur ledit moteur 9.

Ces informations correspondent à des paramètres tels que le régime du moteur 9, les températures ambiante et moteur, et les actions du conducteur du véhicule.

En fonction notamment de ces paramètres, l'unité de commande moteur 10 envoie des ordres au module de commande 4.

Par exemple, cet ordre peut correspondre à une demande de démarrage du moteur thermique 9 via l'alterno-démarreur 2.

On va maintenant décrire en détail le procédé de démarrage du moteur 9 en référence à la figure 2.

Dans l'exemple décrit, lorsque qu'une demande de démarrage du moteur thermique 9 intervient, le module de commande 4 commande un préfluxage du rotor de l'alterno-démarreur 2, à une étape E100.

Durant l'étape de préfluxage, l'alterno-démarreur fonctionne en mode générateur et présente un rapport cyclique de 100%, correspondant à un rapport cyclique maximum défini pour le mode moteur de cet alterno-démarreur.

A une étape E101, le module 4 contrôle une vitesse, notamment angulaire, du rotor de l'alterno-démarreur 2 appelée Nᵣ.

Pour cela, le module 4 obtient à cette étape E101 la vitesse Nᵣ qui provient d'un capteur 7 relié au module 4.

Le capteur 7 est de préférence disposé à proximité du rotor de l'alterno-démarreur 2.

La vitesse Nᵣ est ensuite transmise au module 4 à qui va la charger et la mémoriser dans une mémoire, notamment volatile, par exemple de type RAM.

Cette mémoire est de préférence implantée dans ce module 4.

Le module 4 compare, à une étape E102, la vitesse Nᵣ à une première valeur de seuil prédéterminée de vitesse Nₛₑᵤᵢₗ₁.

Cette vitesse Nₛₑᵤᵢₗ₁ peut par exemple être comprise dans l'intervalle de valeur [750tr/min ; 1500tr/min].

Avantageusement, la vitesse Nₛₑᵤᵢₗ₁ correspond sensiblement à la vitesse du rotor à laquelle l'alterno-démarreur est capable de débiter un courant d'alimentation dirigé vers le réseau de distribution électrique 5.

Si la vitesse Nᵣ est supérieure ou égale à la vitesse Nₛₑᵤᵢₗ₁, alors le module de commande 4 commande, à une étape E103, l'arrêt du préfluxage du rotor.

Ainsi, il est possible d'éviter, durant le démarrage du moteur thermique 9 via l'alterno-démarreur 2, la génération de surtensions vers le réseau de distribution électrique 5.

Si le calcul de comparaison résulte en une vitesse Nᵣ inférieure à la vitesse Nₛₑᵤᵢₗ₁, alors le module de commande 4 contrôle à nouveau la vitesse Nᵣ, jusqu'à ce qu'elle devienne supérieure ou égale à Nₛₑᵤᵢₗ₁.

Le module 4 commande ensuite, à une étape E104, l'inhibition du préfluxage, pour empêcher qu'une nouvelle étape de préfluxage se répète avant que le démarrage du moteur thermique 9 ne soit terminé.

Le module 4 doit ensuite commander l'alterno-démarreur 2 de manière à achever la phase de démarrage du moteur thermique 9.

Pour cela, le module de commande 4 commande, à une étape E105, le mode moteur de l'alterno-démarreur 2, en agissant sur le convertisseur alternatif-continu 3, pour démarrer le moteur thermique 9.

Dans ce cas, l'alterno-démarreur 2 peut présente un rapport cyclique de 100% en fournissant un couple au moteur thermique 9.

En variante de l'étape E105, le module 4 commande, à une étape E106, un repos de l'alterno-démarreur 2, en conservant le mode de fonctionnement générateur de celui-ci.

Dans ce cas, le module 4 agit sur le convertisseur 3 de manière à ce que l'alterno-démarreur 2 présente un rapport cyclique inférieur ou égal à 50% en fournissant de l'énergie électrique.

De préférence, ce rapport cyclique aura une valeur nulle pendant une période prédéterminée, dite de sécurité. Le cas échéant, l'étape de repos E106 est assimilée à une étape d'arrêt de l'alterno-démarreur 2.

Pour démarrer le moteur thermique 9, l'unité de commande moteur 10 commande, notamment via le module de commande 4, un démarreur auxiliaire 12, visible à la figure 1, alimenté par la batterie 6 et relié, d'une part, au module de commande 4, et d'autre part, au moteur thermique 9.

## Revendications

1. Procédé de commande d'un système dit micro-hybride (1) comportant une machine électrique tournante réversible (2) pouvant être reliée à un moteur thermique (9) d'un véhicule automobile, un réseau de distribution électrique (5), et un module de commande, le procédé comportant les étapes suivantes:
- commander une étape de préfluxage sans fourniture de couple d'un rotor de la machine électrique tournante réversible lorsque le module de commande reçoit un ordre de démarrer le moteur thermique via la machine électrique tournante réversible,
- mesurer une vitesse (Nᵣ) du rotor de la machine électrique tournante réversible,
- commander un arrêt de l'étape de préfluxage lorsque la vitesse du rotor est supérieure ou égale à une valeur de seuil de vitesse prédéterminée (Nₛₑᵤᵢₗ₁) pour éviter la génération de surtensions vers le réseau de distribution électrique (5).

2. Procédé selon la revendication précédente, **caractérisé par le fait que** la valeur de seuil prédéterminée (Nₛₑᵤᵢₗ₁) correspond sensiblement à la vitesse du rotor (Nᵣ) à laquelle la machine électrique tournante réversible (2) commence à fournir une alimentation électrique, notamment à un réseau de distribution électrique (5).

3. Procédé selon l'une des deux revendications précédentes, **caractérisé par le fait qu'**il comporte une étape d'inhibition de l'étape de préfluxage, notamment pour empêcher que cette étape se répète avant que le moteur thermique (9) ne démarre.

4. Procédé selon l'une quelconque des revendications précédentes, **caractérisé par le fait qu'**il comporte une étape de démarrage du moteur thermique (9) via la machine électrique tournante réversible (2) en actionnant le mode moteur de cette machine.

5. Procédé selon la revendication précédente, **caractérisé par le fait qu'**il comporte une étape de commander un rapport cyclique de la machine (2) à une valeur de 100% en fournissant un couple au moteur thermique (9).

6. Procédé selon l'une des revendications 1 à 3, **caractérisé par le fait qu'**il comporte une étape de repos de la machine électrique tournante réversible (2) en gardant le mode générateur de cette machine.

7. Procédé selon la revendication précédente, **caractérisé par le fait qu'**il comporte une étape de commander un rapport cyclique de la machine (2) à une valeur inférieur ou égal à 50% en fournissant de l'énergie électrique.

8. Procédé selon l'une des revendications 6 et 7, **caractérisé par le fait qu'**il comporte une étape de démarrer le moteur thermique (9) avec un démarreur auxiliaire (12) du système dit micro-hybride (1).

9. Procédé selon l'une quelconque des revendications précédentes, **caractérisé par le fait qu'**il commande un convertisseur alternatif-continu (3) du système dit micro-hybride (1), ce convertisseur étant relié à la machine électrique tournante réversible (2).

10. Module de commande (4) d'un système dit micro-hybride (1) comportant une machine électrique tournante réversible (2) pouvant être reliée à un moteur thermique (9) d'un véhicule automobile et un réseau de distribution électrique (5), ce module de commande comportant:
- des moyens pour commander une étape de préfluxage sans fourniture de couple d'un rotor de la machine électrique tournante réversible lorsque le module de commande reçoit un ordre de démarrer le moteur thermique via la machine électrique tournante réversible,
- des moyens pour mesurer une vitesse du rotor (Nᵣ) de la machine électrique tournante réversible,
- des moyens pour commander un arrêt de l'étape de préfluxage lorsque la vitesse du rotor est supérieure ou égale à une valeur de seuil de vitesse prédéterminée (Nₛₑᵤᵢₗ₁) pour éviter la génération de surtensions vers le réseau de distribution électrique (5).

11. Système dit micro-hybride (1) pour véhicule automobile comportant:
- une machine électrique tournante réversible (2),
- un module de commande (4) selon la revendication précédente.

12. Système (1) selon la revendication précédente **caractérisé par le fait qu'**il comporte un dispositif de démarrage auxiliaire (12) apte à démarrer le moteur thermique (9).

13. Véhicule automobile comportant un système dit micro-hybride (1) selon l'une des revendications 11 et 12.

## Patentansprüche

1. Verfahren zur Steuerung eines so genannten Micro-Hybrid-Systems (1), das eine reversible rotierende elektrische Maschine (2), die mit einem Verbrennungsmotor (9) eines Kraftfahrzeugs verbunden sein kann, ein elektrisches Verteilungsnetz (5) und ein Steuermodul aufweist, wobei das Verfahren die folgenden Schritte aufweist:
- Steuern eines Vormagnetisierungsschritts ohne Liefern eines Drehmoments eines Rotors der reversiblen rotierenden elektrischen Maschine, wenn das Steuermodul einen Befehl zum Starten des Verbrennungsmotors über die reversible rotierende elektrische Maschine empfängt,
- Messen einer Geschwindigkeit (Nᵣ) des Rotors der reversiblen rotierenden elektrischen Maschine,
- Steuern eines Anhaltens des Vormagnetisierungsschritts, wenn die Geschwindigkeit des Rotors größer als ein oder gleich einem vorbestimmten Geschwindigkeitsschwellwert (Nₛₑᵤᵢₗ₁) ist, um die Erzeugung von Überspannungen zum elektrischen Verteilungsnetz (5) zu vermeiden.

2. Verfahren nach dem vorhergehenden Anspruch, **dadurch gekennzeichnet, dass** der vorbestimmte Schwellwert (Nₛₑᵤᵢₗ₁) im Wesentlichen der Geschwindigkeit (Nᵣ) des Rotors entspricht, bei der die reversible rotierende elektrische Maschine (2) beginnt, eine elektrische Versorgung zu liefern, insbesondere an ein elektrisches Verteilungsnetz (5).

3. Verfahren nach einem der zwei vorhergehenden Ansprüche, **dadurch gekennzeichnet, dass** es einen Schritt des Sperrens des Vormagnetisierungsschritts aufweist, insbesondere, um zu verhindern, dass dieser Schritt sich wiederholt, ehe der Verbrennungsmotor (9) startet.

4. Verfahren nach einem der vorhergehenden Ansprüche, **dadurch gekennzeichnet, dass** es einen Schritt des Startens des Verbrennungsmotors (9) über die reversible rotierende elektrische Maschine (2) durch Betätigen der Motorbetriebsart dieser Maschine aufweist.

5. Verfahren nach dem vorhergehenden Anspruch, **dadurch gekennzeichnet, dass** es einen Schritt des Steuerns eines zyklischen Verhältnisses der Maschine (2) auf einen Wert von 100% aufweist, indem ein Drehmoment an den Verbrennungsmotor (9) geliefert wird.

6. Verfahren nach einem der Ansprüche 1 bis 3, **dadurch gekennzeichnet, dass** es einen Schritt der Ruhestellung der reversiblen rotierenden elektrischen Maschine (2) aufweist, indem die Generatorbetriebsart dieser Maschine beibehalten wird.

7. Verfahren nach dem vorhergehenden Anspruch, **dadurch gekennzeichnet, dass** es einen Schritt des Steuerns eines zyklischen Verhältnisses der Maschine (2) auf einen Wert von weniger als oder gleich 50% aufweist, indem elektrische Energie geliefert wird.

8. Verfahren nach einem der Ansprüche 6 und 7, **dadurch gekennzeichnet, dass** es einen Schritt des Startens des Verbrennungsmotors (9) mit einem Hilfsstarter (12) des so genannten Micro-Hybrid-Systems (1) aufweist.

9. Verfahren nach einem der vorhergehenden Ansprüche, **dadurch gekennzeichnet, dass** es einen Gleichrichter (3) des Micro-Hybrid-Systems (1) steuert, wobei dieser Gleichrichter mit der reversiblen rotierenden elektrischen Maschine (2) verbunden ist.

10. Steuermodul (4) eines so genannten Micro-Hybrid-Systems (1), das eine reversible rotierende elektrische Maschine (2), die mit einem Verbrennungsmotor (9) eines Kraftfahrzeugs verbunden werden kann, und ein elektrisches Versorgungsnetz (5) aufweist, wobei dieses Steuermodul aufweist:
- Einrichtungen zum Steuern eines Vormagnetisierungsschritts ohne Liefern eines Drehmoments eines Rotors der reversiblen rotierenden elektrischen Maschine, wenn das Steuermodul einen Befehl zum Starten des Verbrennungsmotors über die reversible rotierende elektrische Maschine empfängt,
- Einrichtungen zum Messen einer Geschwindigkeit (Nᵣ) des Rotors der reversiblen rotierenden elektrischen Maschine,
- Einrichtungen zum Steuern eines Anhaltens des Vormagnetisierungsschritts, wenn die Geschwindigkeit des Rotors größer als ein oder gleich einem vorbestimmten Geschwindigkeitsschwellwert (Nₛₑᵤᵢₗ₁) ist, um die Erzeugung von Überspannungen zum elektrischen Verteilungsnetz (5) zu vermeiden.

11. So genanntes Micro-Hybrid-System (1) für ein Kraftfahrzeug, das aufweist:
- eine reversible rotierende elektrische Maschine (2),
- ein Steuermodul (4) nach dem vorhergehenden Anspruch.

12. System (1) nach dem vorhergehenden Anspruch, **dadurch gekennzeichnet, dass** es eine Hilfsstartvorrichtung (12) aufweist, die den Verbrennungsmotor (9) starten kann.

13. Kraftfahrzeug, das ein so genanntes Micro-Hybrid-System (1) nach einem der Ansprüche 11 und 12 aufweist.

## Claims

1. Method for controlling a system referred to as a microhybrid system (1) comprising a reversible rotary electric machine (2) that can be connected to a motor vehicle combustion engine (9), an electrical distribution network (5) and a control module, the method comprising the following steps:
- commanding a step of pre-fluxing a rotor of the reversible rotary electric machine without supplying torque when the control module receives a demand to start the combustion engine via the reversible rotary electric machine,
- measuring a speed (Nᵣ) of the rotor of the reversible rotary electric machine,
- commanding a stopping of the pre-fluxing step when the rotor speed is greater than or equal to a predetermined speed threshold value (Nₜₕᵣₑₛₕ₁) in order to avoid generating overvoltages towards the electrical distribution network (5).

2. Method according to the preceding claim, **characterized in that** the predetermined threshold value (Nₜₕᵣₑₛₕ₁) corresponds substantially to the rotor speed (Nᵣ) at which the reversible rotary electric machine (2) begins to supply electrical power, notably to an electrical distribution network (5).

3. Method according to one of the two preceding claims, **characterized in that** it comprises a step of inhibiting the pre-fluxing step, notably in order to prevent this step from being repeated before the combustion engine (9) starts.

4. Method according to any one of the preceding claims, **characterized in that** it comprises a step of starting the combustion engine (9) using the reversible rotary electric machine (2) by actuating the motor mode of this machine.

5. Method according to the preceding claim, **characterized in that** it comprises a step of commanding a duty cycle value of 100% for the machine (2) with the supply of torque to the combustion engine (9).

6. Method according to one of Claims 1 to 3, **characterized in that** it comprises a step of resting the reversible rotary electric machine (2), keeping this machine in generator mode.

7. Method according to the preceding claim, **characterized in that** it comprises a step of commanding a duty cycle value less than or equal to 50% for the machine (2) with the supply of electrical energy.

8. Method according to one of Claims 6 and 7, **characterized in that** it comprises a step of starting the combustion engine (9) using an auxiliary starter (12) of the system referred to as a microhybrid system (1).

9. Method according to any one of the preceding claims, **characterized in that** it controls an AC-DC converter (3) of the system referred to as a microhybrid system (1), this converter being connected to the reversible rotary electric machine (2).

10. Control module (4) for a system referred to as a microhybrid system (1) comprising a reversible rotary electric machine (2) that can be connected to a combustion engine (9) of a motor vehicle and an electrical distribution network (5), this control module comprising:
- means for commanding a step of pre-fluxing a rotor of the reversible rotary electric machine without the supply of torque when the control module receives a demand to start the combustion engine using the reversible rotary electric machine,
- means for measuring a speed (Nᵣ) of the rotor of the reversible rotary electric machine,
- means for commanding the stopping of the pre-fluxing step when the speed of the rotor is greater than or equal to a predetermined speed threshold value (Nₜₕᵣₑₛₕ₁) so as to avoid generating overvoltages toward the electrical distribution network (5).

11. System referred to as a microhybrid system (1) for a motor vehicle, comprising:
- a reversible rotary electric machine (2),
- a control module (4) according to the preceding claim.

12. System (1) according to the preceding claim, **characterized in that** it comprises an auxiliary starting device (12) able to start the combustion engine (9).

13. Motor vehicle comprising a system referred to as a microhybrid system (1) according to one of Claims 11 and 12.
